# DEMANDE DE BREVET EUROPEEN

(11) **EP 2 073 521 A1**
(43) Date de publication de la demande: **24.06.2009**
(21) Numéro de dépôt: 08305956.8
(22) Date de dépôt: 17.12.2008
(51) Int. Cl.: H04M 3/42

(54) **Procédé d'acheminement de communications téléphoniques**

(30) Priorité: 20.12.2007 FR 0760171
(71) Demandeur: IBC Canada, Montreal, QC H3A 1G1 (CA)
(72) Inventeur: Illouz, William, 75116 Paris (FR)
(74) Mandataire: Beauvais, Emmanuelle

(57) **Abrégé**

L'invention se rapporte à un procédé d'acheminement de communications téléphoniques à destination d'un utilisateur particulier (1), **caractérisé en ce qu**'il comprend les étapes suivantes :
- l'étape, pour l'utilisateur (1), de s'inscrire auprès d'un fournisseur de services, et d'enregistrer auprès de ce fournisseur un numéro de téléphone lié à un terminal de téléphonie (11, 12) appartenant, en tant que numéro de destination,
- l'étape, pour le fournisseur de services, d'associer, dans une base de données (4) enregistrée sur un serveur, un numéro de téléphone temporaire à l'utilisateur (1),
- l'étape, pour le fournisseur de services, de collecter (15) toutes les communications téléphoniques émises à destination du numéro de téléphone temporaire,
- l'étape pour le fournisseur, de rechercher dans une base de données (4) le numéro de destination correspondant au numéro de téléphone temporaire, en utilisant des informations sur l'utilisateur (1),
- l'étape, pour le fournisseur de services, d'acheminer ces communications téléphoniques en direction du numéro de destination.

L'invention concerne également un système d'acheminement de communications téléphoniques à destination d'un utilisateur particulier.

## Description

La présente invention se situe dans le domaine de la fourniture de services en télécommunications.
De manière plus précise, l'invention se situe dans le domaine de l'acheminement de communications téléphoniques émises par un utilisateur particulier à destination d'un autre utilisateur particulier.

De manière plus précise encore, la présente invention vise à fournir un service d'acheminement d'appels téléphoniques permettant à un utilisateur de disposer d'un numéro d'appel temporaire, ou numéro relais, et ainsi d'être contacté sur son téléphone personnel sans avoir besoin d'en donner le numéro.

On connaît, à l'heure actuelle, des fournisseurs de services d'appels téléphoniques d'un pays à un autre, proposant des communications extraterritoriales à coût réduit, par le biais de l'acquisition de cartes prépayées. Le principe de tels services est le suivant :
- un utilisateur acquiert un certain nombre de minutes de communications valables pour des communications téléphoniques d'un pays vers un ou plusieurs autres ; cette acquisition est effectuée soit sous forme dématérialisée, via un site Internet, soit sous forme d'une carte prépayée ;
- cet achat lui permet d'obtenir un code d'achat et un numéro de téléphone d'un situé dans la zone géographique où il se trouve ; l'acheteur peut alors appeler ce serveur et indiquer son code d'achat, prouvant qu'il dispose de minutes de communications, ainsi que le numéro d'appel du correspondant qu'il souhaite joindre,
- le serveur achemine alors l'appel en décomptant le temps de communications du nombre de minutes prépayées.

Ainsi, dans ce type de service, l'utilisateur paye une communication locale, de son poste jusqu'au serveur, et paye ensuite des minutes de communication à bas prix. Toutefois, ce service ne permet pas à un utilisateur d'être appelé par un correspondant, mais uniquement d'appeler lui-même.

On connaît également des numéros de téléphone surtaxés, permettant la vente de services par téléphone, ou permettant à des entreprises de faire payer les clients souhaitant les joindre, par exemple dans le cadre d'un service client. De tels numéros de téléphone sont généralement reconnaissables par les premiers chiffres, qui permettent d'indiquer aux appelants la nature spécifique de ces numéros.
Le principe est le suivant : un utilisateur compose le numéro spécial, ce qui conduit à l'établissement d'une communication téléphonique avec un serveur de gestion de ces numéros spéciaux. Ce serveur achemine alors l'appel vers le destinataire final, à savoir l'entreprise utilisatrice du service de numéros spéciaux. L'appel surtaxé est facturé à l'appelant par le gestionnaire du serveur, qui reverse une partie des gains à l'entreprise utilisatrice du service. Les services de ce type, bien que fonctionnant parfaitement, ne sont pour l'instant pas accessibles aux utilisateurs particuliers, car ils nécessitent l'accomplissement de lourdes formalités administratives pour y souscrire, et sont donc réservés aux entreprises.

Ainsi, l'invention vise à fournir un procédé permettant de donner à tout utilisateur la possibilité de disposer d'un numéro de téléphone temporaire, servant de relais entre un appelant souhaitant joindre l'utilisateur, qui est l'appelé, sans que ce dernier n'ait besoin de communiquer son véritable numéro.
L'invention concerne donc un procédé d'acheminement de communications téléphoniques à destination d'un utilisateur particulier, caractérisé en ce qu'il comprend les étapes suivantes :
- l'étape, pour l'utilisateur, de s'inscrire auprès d'un fournisseur de services, et d'enregistrer auprès de ce fournisseur un numéro de téléphone lié à un terminal de téléphonie lui appartenant, en tant que numéro de destination,
- l'étape, pour le fournisseur de services, d'associer, dans une base de données enregistrée sur un serveur, un numéro de téléphone temporaire à l'utilisateur,
- l'étape, pour le fournisseur de services, de collecter toutes les communications téléphoniques émises à destination du numéro de téléphone temporaire,
- l'étape pour le fournisseur, de rechercher dans une base de données le numéro de destination correspondant au numéro de téléphone temporaire, en utilisant des informations sur l'utilisateur,
- l'étape, pour le fournisseur de services, d'acheminer ces communications téléphoniques en direction du numéro de destination.

On précise ici que, dans la suite de la description, les expressions « appel téléphonique » et « communication téléphonique » seront indifféremment utilisées pour désigner la même opération.
Un tel service trouve une application particulièrement intéressante dans les systèmes de petites annonces pour la vente de biens ou de services, dans lesquels il peut être utile de pouvoir donner un numéro de téléphone qui soit valide uniquement pendant une durée déterminée, contrôlée par l'utilisateur, par exemple jusqu'à la vente du bien concerné.
Le procédé d'acheminement s'applique également dans le cadre des sites de rencontre par Internet, puisqu'il peut être utile pour un utilisateur de ces sites de pouvoir fournir aux autres utilisateurs un numéro temporaire, qu'il peut désactiver à tout instant, par exemple s'il se sent harcelé par une personne qu'ils ont rencontrée sur le site.
Dans un tout autre domaine, l'invention peut avantageusement être utilisée par des entreprises désirant fournir à leurs clients des numéros de téléphone qui permettent de joindre directement les employés de la société, et qui restent valables en cas de départ et de remplacement d'un employé. Ceci permet, d'une part, d'éviter de déconcerter les clients par de nombreux changements de numéro de téléphone, et d'autre part d'éviter toute fuite de clientèle puisqu'une fois que les employés ont quitté la société, ils ne peuvent plus être contactés par le numéro de téléphone qui leur était attribué auparavant.

Dans toute la suite de la description, l'expression « numéro de téléphone appartenant à un utilisateur » désigne de façon simplifiée un numéro de téléphone lié à un terminal ou à une carte SIM appartenant à cet utilisateur.
L'inscription auprès du fournisseur de services est effectuée de manière très simple, par exemple via un site Internet.
Dans une réalisation avantageuse, cette inscription correspond à la transmission, par un utilisateur, d'informations le concernant telles que son nom, son numéro de téléphone, et éventuellement ses coordonnées bancaires pour faciliter le paiement du services.
Ces données sont alors enregistrées dans une base de données d'un serveur permettant la mise en oeuvre du procédé. L'enregistrement est, par exemple, effectué sous forme d'un profil utilisateur, dans lequel il est possible d'ajouter et de modifier de nombreuses caractéristiques, ultérieurement détaillées dans la présente description.

En outre, il peut être utile pour un utilisateur du procédé d'acheminement, ayant à sa disposition plusieurs terminaux de téléphonie, de pouvoir recevoir les appels sur le terminal de son choix. A cet effet, dans une réalisation, le procédé comprend l'étape, pour un utilisateur, d'enregistrer auprès du serveur un second numéro de téléphone lié à un terminal de téléphonie lui appartenant, et de choisir le numéro de téléphone réel devant être utilisé comme numéro de destination.
Ainsi, un utilisateur a la possibilité d'enregistrer dans son profil utilisateur plusieurs numéros de téléphone, par exemple le numéro de son domicile et un numéro de téléphone portable, et choisir ensuite sur quel numéro il souhaite recevoir les appels.

Par ailleurs, afin d'éviter toute malversation de la part d'une personne mal intentionnée, il est utile de pouvoir vérifier, avant d'acheminer les appels téléphoniques vers un numéro de téléphone, que ce numéro appartient effectivement à l'utilisateur.
Ainsi, dans une réalisation, le procédé comprend une vérification du numéro de téléphone enregistré par l'utilisateur, cette vérification comprenant les étapes suivantes :
- l'étape, pour le fournisseur de services d'envoyer, en direction du numéro de téléphone, un message textuel ou vocal, comprenant un code de confirmation,
- l'étape, pour l'utilisateur, de renvoyer ce code de confirmation au fournisseur de services.
   Le renvoi du code de confirmation peut être effectué de différentes manières. On peut, par exemple, envisager une réponse par message texte, au fournisseur de services, en incluant le code reçu. On peut également envisager la confirmation par l'entrée du code de confirmation sur l'interface du site Internet. L'information de confirmation est, par exemple, enregistrée dans le profil utilisateur.

L'invention ici proposée concerne la fourniture d'un service payant à un utilisateur. Une des possibilités retenues pour facturer ce service est de facturer, d'une part, l'allocation du numéro temporaire pendant une durée déterminée, et d'autre part les minutes de communication correspondant à l'acheminement des communications téléphoniques.
Ainsi, dans une réalisation, le procédé est caractérisé en ce qu'il comprend en outre les étapes, pour l'utilisateur :
- de choisir auprès du fournisseur de services une durée de validité du numéro de téléphone temporaire choisie par l'utilisateur, et/ou
- de créditer un compte avec une quantité d'unités de communication disponibles pour être utilisées.

Dans le cas où les minutes de communication sont retenues comme critère de facturation, le procédé comprend l'étape, pour le fournisseur de services, de mesurer la durée des appels acheminés avec succès vers le numéro de destination, et de mettre à jour le crédit de communications restant.

Dans le cas où la facturation est déterminée en fonction d'une durée de validité, le fournisseur vérifie, à la réception d'un appel sur un numéro de téléphone temporaire, la validité de ce numéro, et procède à l'acheminement uniquement si le numéro de téléphone temporaire est valide.

Les deux critères de facturation ci-dessus sont utilisables indépendamment l'un de l'autre, ou en combinaison.
Dans les deux cas, il est utile de prévenir un utilisateur lorsqu'il convient qu'il procède à un nouveau paiement pour pouvoir continuer à utiliser le service.
Ainsi, dans une réalisation, le procédé comprend l'étape, pour le fournisseur de services, d'envoyer une information à l'utilisateur lorsque :
- la durée de validité du numéro de téléphone arrive à son terme, et/ou
- le nombre d'unités de communication, ou crédit de communications, disponibles arrive à épuisement.

L'envoi de cette information peut être effectué via un message texte, de type SMS, via un message vocal, ou via un message électronique, par exemple si l'utilisateur a enregistré une adresse électronique dans son profil utilisateur.

L'invention concerne également un système d'acheminement de communications téléphoniques à destination d'un utilisateur particulier, caractérisé en ce qu'il comprend un serveur et au moins une base de données contenant des informations utilisateur, le serveur comportant :
- des moyens de collecte de communications téléphoniques,
- des moyens de routage et d'acheminement de communications téléphoniques,
- des moyens pour extraire de la base de données les informations nécessaires à l'acheminement des communications téléphoniques collectées.

D'autres avantages et caractéristiques de l'invention apparaîtront avec la description de certains de ses modes de réalisation, cette description étant effectuée à titre non limitatif à l'aide des figures sur lesquelles :
- la figure 1 représente les interactions entre un utilisateur et un système mettant en oeuvre un procédé selon l'invention, et
- la figure 2 représente un système permettant de mettre en oeuvre un procédé selon l'invention.

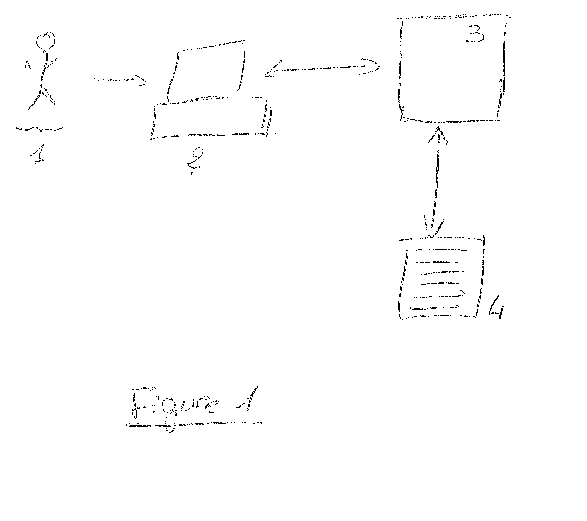

La figure 1 montre les interactions entre un utilisateur 1 et un système d'acheminement d'appels téléphoniques mettant en oeuvre un procédé selon l'invention.
L'utilisateur 1 est muni d'un ordinateur 2 grâce auquel il se connecte à un site Internet géré par le fournisseur de services.
Ce site Internet permet de faire l'interface entre l'utilisateur 1 et un système 3 de mise en oeuvre du procédé.
Lors de son premier accès au site Internet, l'utilisateur enregistre un certain nombre de données le concernant, comprises dans le groupe comprenant entre autres : son prénom, son nom, son adresse, un ou plusieurs de ses numéros de téléphone, et ses coordonnées bancaires. En outre, il peut choisir ou se voir attribuer un pseudonyme, permettant d'accéder plus facilement et plus rapidement au profil utilisateur

Ce profil utilisateur est enregistré dans une base de données 4, enregistrée directement dans le serveur 3, ou dans un dispositif en communication avec le serveur 3.
Selon les réalisations, la base de données 4 comprend une ou plusieurs parties, chaque partie étant en elle-même une base de données.
Ainsi, une première partie, dite « Informations générales » de la base de données 4 comprend alors, par exemple, des enregistrements du type :

**« INFORMATIONS GENERALES »**

| **Pseudonyme** | **Nom Prénom** | **Adresse** | **E-mail** | **Banque** |
|---|---|---|---|---|
| User_1 | Dupont Jean | XXXX | jdupont@mail.com | XXXX |
| User_2 | Martin Paul | XXXXX | pmartin@mail.com | XXXX |

Dans une autre partie, dite « Numéros de téléphone », de la base de données, on enregistre les différents numéros de téléphone d'un utilisateur, à savoir :
- le numéro de téléphone temporaire qui lui est attribué, et
- un ou plusieurs numéros de téléphone lui appartenant, le premier étant utilisé comme numéro de destination pour l'acheminement des appels.

**« NUMEROS DE TELEPHONE »**

| **Pseudonyme** | **N° temporaire** | **N° téléphone 1** | **N° téléphone 2** |
|---|---|---|---|
| User_1 | 01 73 XXXXXX | 06 56 XXXXXX | 01 40 XXXXXX |
| User_2 | 01 73 XXXXXX | 04 71 XXXXXX | 06 24 XXXXXX |

Lorsque l'utilisateur User_1 enregistre le numéro de téléphone 1, qui est un numéro de téléphone portable en France, il reçoit sur ce téléphone un message texte de type SMS, contenant un code de confirmation. Il renvoie alors ce code de confirmation au fournisseur de services pour valider l'enregistrement définitif du numéro dans la base de données. Le renvoi est effectué soit par retour de SMS, soit via une page du site Internet du fournisseur, et permet de vérifier que l'utilisateur est effectivement en possession du téléphone portable dont il a donné le numéro.
A chaque nouveau numéro enregistré, une procédure similaire de confirmation est mise en oeuvre. Ainsi, lors de l'enregistrement du numéro de téléphone 2 de l'utilisateur User_1, qui est un numéro de téléphone fixe en France, un serveur vocal appelle le numéro et indique, à l'établissement de la communication, un code de confirmation à renvoyer au fournisseur de service.

Après la création du profil utilisateur et l'enregistrement des différentes informations, l'utilisateur est en mesure de louer un numéro de téléphone pour une durée déterminée, et de créditer son compte d'une certaine somme d'argent, correspondant à un nombre de minutes de communication variables, selon le pays dans lequel il se trouve lorsqu'un appel lui est acheminé depuis le serveur. Ainsi que mentionné précédemment, l'invention ne se restreint pas à l'un ou l'autre de ces modes de facturation, mais peut être étendue à tout autre mode, au choix du fournisseur de services.
Le numéro de téléphone temporaire, montré dans le tableau précédent, est attribué par le fournisseur de services lors du premier achat d'un utilisateur.
La durée de validité de ce numéro de téléphone et le crédit disponible pour l'utilisateur sont enregistrées dans une partie « Compte » de la base de données 4.
Par exemple, si l'utilisateur loue, le 21 décembre 2007, un numéro de téléphone pour une durée de 4 mois et crédite son compte d'un montant de 50 euros, l'enregistrement effectué dans la base de données à compter de la confirmation du paiement se fera sous la forme suivante :

**« COMPTES »**

| **Pseudonyme** | **N° temporaire** | **Date d'expiration** | **Crédit restant** |
|---|---|---|---|
| User_1 | 01 73 XXXXXX | 21/04/2008 | 50 euros |

Nous décrirons ultérieurement les changements enregistrés dans la partie « Compte » au fur et à mesure de la mise en oeuvre du procédé. On précise ici que les différentes parties de la base de données ne sont données qu'à titre d'exemple non limitatif ; un procédé selon l'invention peut faire appel à tout type de base de données.
Dès lors qu'un utilisateur 1 a créé son compte, loué un numéro et crédité son compte d'un certain montant, il est en mesure d'utiliser le service d'acheminement de communications téléphoniques, c'est à dire d'être contacté par des appelants via le numéro de téléphone temporaire.

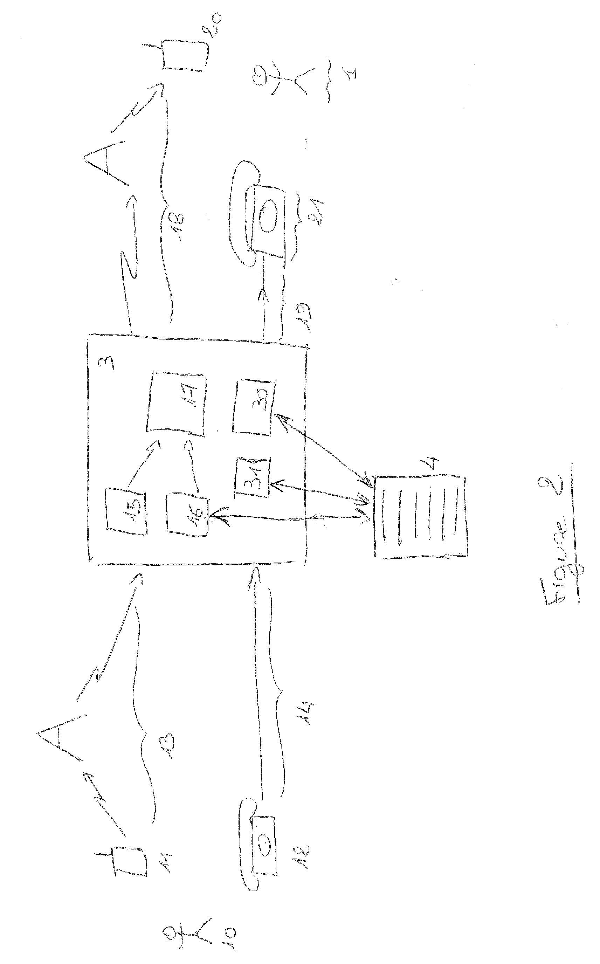

La figure 2 illustre une mise en oeuvre du procédé dans le cas où un utilisateur 10 souhaite contacter l'utilisateur 1.

L'utilisateur 10 dispose d'un numéro de téléphone qui lui a été communiqué par l'utilisateur 1 qu'il souhaite joindre. L'utilisateur 10 ne sait pas nécessairement que ce numéro de téléphone est temporaire, puisque le format du numéro est du même type que les numéros de téléphone « classiques ».
Muni d'un terminal de téléphonie, par exemple un téléphone portable 11 (respectivement un téléphone fixe 12), l'utilisateur 10 compose le numéro temporaire 01 73 XXXXXX. Cet appel téléphonique est acheminé par un réseau de téléphonie mobile 13 (respectivement un réseau de téléphonie filaire 14) géré par un opérateur auprès duquel l'utilisateur 10 a souscrit un abonnement.
L'appel est collecté dans le serveur 3 par des moyens de collecte 15 qui ont accès à une liste de numéros de téléphone temporaires utilisés par le service d'acheminement, et qui sont en capacité de collecter tous les appels émis à destination de ces numéros de téléphone.
On précise ici que la première partie de l'acheminement de l'appel, à savoir du terminal de l'utilisateur 10 vers le serveur 3, est indépendante de l'invention.
A réception de l'appel téléphonique par les moyens de collecte 15, le serveur vérifie dans un premier temps que ce numéro est valide et utilisable.
Ces vérifications sont effectuées par des moyens 16, qui communiquent avec la base de données 4 pour déterminer les éléments suivants :
- à partir du numéro de téléphone temporaire, les moyens de vérification 16 vérifient la date d'expiration de la location du numéro; si cette date n'est pas dépassée, alors
- les moyens 16 vérifient que le crédit de communications associé à l'utilisateur et à ce numéro de téléphone n'est pas épuisé. Si le crédit est non nul, alors
- les moyens 16 extraient de la base de données un numéro de destination, choisi par l'utilisateur 1. Ce numéro est, par exemple, lié à un téléphone portable 20 ou à un téléphone fixe 21 lui appartenant.

A partir de là, les moyens 16 communiquent le numéro de téléphone de destination à un routeur 17, chargé d'acheminer l'appel téléphonique vers l'utilisateur 1. Ce routeur reçoit également la communication téléphonique collectée au préalable par les moyens de collecte 15. Cet acheminement est effectué via un réseau de téléphonie mobile 18 ou de téléphonie filaire 19, géré par un opérateur auprès duquel le fournisseur de services a souscrit un abonnement.
On précise ici que, dans le système 3, l'acheminement des communications téléphoniques, des moyens de collecte 15 vers le routeur 17, sont effectuées en utilisant un protocole de communications Internet.

Le serveur 3 est, en outre, muni de moyens de mesure 30 permettant de déterminer la durée des appels acheminés par le routeur à destination d'un téléphone portable 20 ou d'un téléphone fixe 21. A chaque fin d'appel, cette durée est utilisée pour mettre à jour, dans la base de données 4, la partie « Comptes » de l'utilisateur 1, en fonction de la durée de l'appel et de sa destination.
Ainsi, dans le cas où le routeur d'acheminement est en France, et où l'utilisateur est également en France, et si l'appel acheminé a une durée de 15 min, le crédit utilisé est 15 fois le tarif fixé pour une minute d'appel France=>France, par exemple 5 centimes la minutes ; Dans ce cas, l'enregistrement sera de la forme :

**AVANT APPEL :**

| Pseudonyme | N° temporaire | Date d'expiration | Crédit restant |
|---|---|---|---|
| User_1 | 01 73 XXXXXX | 21/04/2008 | 50 euros |

**APRES APPEL**

| Pseudonyme | N° temporaire | Date d'expiration | Crédit restant |
|---|---|---|---|
| User_1 | 01 73 XXXXXX | 21/04/2008 | 50 euros - (15*5 cts) = 49 euros et 25 cents |

Par ailleurs, le serveur 3 comporte des moyens de gestion de compte 31, dont une des fonctions consiste à prévenir les utilisateurs lorsque la location de leur numéro arrive à expiration, ou lorsque le crédit de communications restant s'approche de zéro.
Ainsi, par exemple, le serveur 3 envoi un message de rappel à l'utilisateur 1 une semaine avant l'expiration de la validité de son numéro, et/ou lorsque le crédit restant devient inférieur à 5 euros.
Cet envoi est effectué, par exemple :
- par message texte de type SMS, en direction du numéro de téléphone lié au téléphone portable 20,
- par message vocal, en direction du téléphone fixe 21, ou
- par message électronique envoyé à une adresse électronique fournie par l'utilisateur lors de son inscription, et enregistrée dans la partie « Informations générales » de la base de données.

Dans un mode de réalisation particulier, l'utilisateur 1 fixe lui-même les paramètres des alertes effectuées par le moyen 31, à savoir :
- la date à partir de laquelle il doit être informé de l'expiration du numéro de téléphone,
- le crédit en deçà duquel il souhaite être prévenu de l'épuisement de son crédit, et
- le moyen d'alerte à utiliser.

L'utilisateur peut également choisir de ne recevoir aucune alerte, et de consulter lui-même son compte régulièrement, par exemple via le site Internet du fournisseur de services.

En ce qui concerne la gestion des numéros de téléphones temporaires, elle est effectuée par le serveur 3 qui dispose d'une liste de numéros à disposition du fournisseur de services.
Dès qu'un numéro de téléphone est attribué à un utilisateur, il est activé, c'est à dire que les moyens 15 sont informés de ce qu'ils doivent collecter tous les appels émis à destination de ce numéro.
Lorsque la période de validité d'un numéro arrive à expiration, et que l'utilisateur qui en disposait décide de ne pas renouveler cette période, plusieurs cas de figure peuvent être envisagés :
- dans une réalisation, le fournisseur de services décide de remettre aussitôt le numéro dans la liste des numéros attribuables,
- dans une réalisation, le fournisseur de services décide de mettre le numéro en attente pendant une certaine durée, par exemple de l'ordre de quelques mois, avant de l'attribuer à un nouvel utilisateur; ce cas de figure évite, par exemple, qu'un nouvel utilisateur ne reçoive des appels téléphoniques destinés à l'utilisateur précédent,
- dans une réalisation, le fournisseur de services décide de mettre le numéro en attente à la demande de l'utilisateur, par exemple si celui-ci souhaite interrompre temporairement son utilisation du service d'acheminement, mais reprendre ultérieurement le même numéro.

Le procédé défini par la présente invention permet donc de fournir un service efficace, facile à utiliser et économique aux utilisateurs particuliers. En effet, la souscription à ce service est relativement simple, puisqu'elle nécessite uniquement la connexion à un site Internet pour créer un compte, et la possession d'un terminal de téléphonie permettant de recevoir les appels acheminés par le serveur.
Ce service permet d'assurer la sécurité et la confidentialité des utilisateurs, puisque les bases de données ne sont pas publiques, et il n'est donc pas possible à un tiers de retrouver, à partir du seul numéro de téléphone, les coordonnées exactes de l'utilisateur.

## Revendications

1. Procédé d'acheminement de communications téléphoniques à destination d'un utilisateur particulier (1), **caractérisé en ce qu'**il comprend les étapes suivantes :
- l'étape, pour l'utilisateur (1), de s'inscrire auprès d'un fournisseur de services, et d'enregistrer auprès de ce fournisseur un numéro de téléphone lié à un terminal de téléphonie (11, 12) lui appartenant, en tant que numéro de destination,
- l'étape, pour le fournisseur de services, d'associer, dans une base de données (4) enregistrée sur un serveur, un numéro de téléphone temporaire à l'utilisateur (1),
- l'étape, pour l'utilisateur (1), de choisir auprès du fournisseur de services une durée de validité du numéro de téléphone temporaire et de créditer un compte avec une quantité d'unités de communication disponibles pour être utilisées,
- l'étape, pour le fournisseur de services, de collecter (15) toutes les communications téléphoniques émises à destination du numéro de téléphone temporaire,
- l'étape pour le fournisseur, de rechercher dans une base de données (4) le numéro de destination correspondant au numéro de téléphone temporaire, en utilisant des informations sur l'utilisateur (1),
- l'étape, pour le fournisseur de services, d'acheminer ces communications téléphoniques en direction du numéro de destination.

2. Procédé selon l'une des revendications précédentes, **caractérisé en ce qu'**il comprend l'étape pour un utilisateur, d'enregistrer un second numéro de téléphone lié à un terminal de téléphonie lui appartenant, et de choisir le numéro de téléphone réel devant être utilisé comme numéro de destination.

3. Procédé selon l'une des revendications précédentes **caractérisé en ce qu'**il comprend une vérification du numéro de téléphone enregistré par l'utilisateur, cette vérification comprenant les étapes suivantes :
- l'étape, pour le fournisseur de services d'envoyer, en direction du numéro de téléphone, un message textuel ou vocal, comprenant un code de confirmation,
- l'étape, pour l'utilisateur, de renvoyer ce code de confirmation au fournisseur de services.

4. Procédé selon la revendication 1 **caractérisé en ce qu'**il comprend l'étape, pour le fournisseur de services, de mesurer la durée des appels acheminés avec succès vers le numéro de destination, et de mettre à jour le crédit d'unités de communication restantes.

5. Procédé selon l'une des revendications précédentes, **caractérisé en ce que** le fournisseur vérifie, à la réception d'un appel sur un numéro de téléphone temporaire, la validité de ce numéro, et procède à l'acheminement uniquement si le numéro de téléphone temporaire est valide.

6. Procédé selon l'une des revendications précédentes, comprenant l'étape, pour le fournisseur de services, d'envoyer une information à l'utilisateur lorsque :
- la durée de validité du numéro de téléphone arrive à son terme, et/ou
- le nombre d'unités de communication disponibles arrive à épuisement.

7. Système d'acheminement de communications téléphoniques à destination d'un utilisateur particulier, **caractérisé en ce qu'**il comprend un serveur et au moins une base de données contenant des informations utilisateur, le serveur comportant :
- des moyens de collecte de communications téléphoniques,
- des moyens de routage et d'acheminement de communications téléphoniques,
- des moyens pour extraire de la base de données les informations nécessaires à l'acheminement des communications téléphoniques collectées.
